# EUROPEAN PATENT APPLICATION

(11) **EP 4 783 161 A1**
(43) Date of publication of application: **29.07.2026**
(21) Application number: 25223463.8
(22) Date of filing: 15.12.2025
(51) Int. Cl.: G10L 15/22, G06V 40/16, G10L 25/63

(54) **METHOD, SYSTEM FOR PROVIDING PERSONALIZED SPEECH DIALOGUE SERVICE AND TRANSACTION SYSTEM**

(30) Priority: 23.01.2025 TW 114102923
(71) Applicant: Playsee Inc., KY1 -1208 West Bay Grand Cayman (KY)
(72) Inventor: LI, YU-HSIEN, 116 TAIPEI CITY (TW)
(74) Representative: Durán-Corretjer, S.L.P.

(57) **Abstract**

A method, a system for providing personalized speech dialogue service and a transaction system. A cloud server (20) is provided for connecting with user device (100)s, providing users a personalized speech dialogue service via a dialogue interface, performing the method by processors. The cloud server (20) is configured to receive speech data generated by a user's real-time speech, or also receive image data, and then extract current speech features and image features. The speech features and the image features are referred to for learning the user's current emotion. A natural language processing model is used to recognize semantic meaning in the speech features. A speech dialogue based on the user's current emotion can be generated according to the semantic meaning and current environmental information. A simulated object displayed on a user device (100) can speak the speech dialogue.

## Description

### FIELD OF THE INVENTION

The present invention relates to a personalized intelligent speech dialogue technology, and more particularly to a computer-implemented method for providing a personalized speech dialogue service, a system, and a transaction system that provides personalized model production.

### BACKGROUND OF THE INVENTION

One of the artificial intelligence (AI) technologies that are in rapid development in various fields is a natural language chatbot. The natural language chatbot such as ChatGPT (Chat Generative Pre-Trained Transformer) developed by OpenAl, Inc. is capable of processing natural language and automatically generating related content. In general, the natural language chatbot uses a generative AI technology that is firstly trained on a huge amount of data to generate new data being correlated with the original data. An intelligence model can be established after a deep-learning process, for example, using generative adversarial networks (GAN).

With ChatGPT as an example, ChatGPT is trained by learning a huge amount of network data and can be used to have conversations with a user in natural language. However, it is common for ChatGPT to answer the user with standard answers that are obtained through a learning process, but ChatGPT fails to provide immediate answers relevant to a current state of the user. The natural language chatbot lacks contents that are relevant to the user and consistent with the current state of the user, namely, the conversation services provided by ChatGPT are general-use and not the personalized speech dialogues that are based on a personalized requirement, a preference and background.

### SUMMARY OF THE INVENTION

In response to the above-referenced technical inadequacies of a conventional chatbot, for a purpose of providing a speech dialogue model capable of outputting speech according to a personal requirement and learned personal preference, provided in the present invention is a method for providing a personalized speech dialogue service, a system, and a transaction system that allows a user to establish a personalized model.

In an aspect, a system that operates the method for providing the personalized speech dialogue service includes a cloud server that connects with a user device. The user device can receive speech generated by the user via a human-machine interface or can also capture images. The cloud server provides the personalized speech dialogue service to the user via a dialogue interface and also performs the method for providing the user the personalized speech dialogue service by one or more processors.

In an aspect of the method operated in the cloud server, a speech data that is generated by a user in real time is received by the user device, and current speech features of the user can be extracted. Next, the user's current emotion can be learned based on the speech features, and semantic meaning of the speech features can be recognized by a natural language processing model. After that, a speech dialogue in response to the user's current emotion, the semantic meaning, and current environmental information can be correspondingly generated. A simulated object displayed on a display of the user device can then output the speech dialogue.

After repeating the above steps, the cloud server receives the speech data generated by the user via the user device, extracts the speech features, learns a current emotion of the user and continuously generates personalized speech dialogues, so that the purpose of providing personalized speech dialogue service is achieved.

Further, when the speech data generated from a real-time speech of the user is received, the system also receives a real-time image data of the user captured by the user device, extracts current image features of the user, and relies on both the speech features and the image features to learn the current emotion of the user.

Further, an audio frequency, a speech rate and wordings that correspond to the current emotion of the user are obtained by querying an emotion database, and the audio frequency, the speech rate and the wordings are referred to for generating the personalized speech dialogues.

Still further, in the cloud server, deep learning is performed to learn preference and personality of the user for establishing a user profile based on the speech data and image data that are continuously received in past and present.

Further, the current environmental information received by the cloud server includes geographic information and a timestamp from the user device, and also weather information corresponding to the geographic information received from an external server.

Still further, in the cloud server, the current speech features and semantic meaning of the speech data of the user are retrieved, and the user profile is obtained based on identification of the user; and the speech dialogue is correspondingly generated according to the semantic meaning, the user profile, and/or the current environmental information.

Further, when the cloud server operates the method for providing a personalized speech dialogue service, the simulated object that is generated by an AI simulation model is retrieved from a database; after the cloud server transmits image signals and model data to the user device, the simulated object is displayed on a display of the user device and simulates pronunciation of the speech dialogue.

The transaction system includes a computer-system-implemented intelligence model transaction platform that can provide options with multiple simulated objects via an interactive interface. The transaction system includes a model database storing multiple simulated objects that are generated by an AI simulation model, and a user database storing user data that is stored and updated in accordance with a time dimension. The transaction system includes a web server that allows the users to customize their personalized simulated objects via a web interface.

The transaction system can receive the speech data generated by the user from a user device so as to receive current speech features of the user and perform deep learning to learn preference and personality of the user for establishing a user profile based on the speech data and image data that are continuously received in past and present.

Moreover, the transaction system receives design parameters via a web interface and creates the personalized simulated object according to the user profile and the design parameters.

In addition to receiving the speech data generated by the users through the computer system, the transaction system can receive image data of the users for establishing user profiles by learning speech features and image features.

These and other aspects of the present invention will become apparent from the following description of the embodiment taken in conjunction with the following drawings and their captions, although variations and modifications therein may be affected without departing from the spirit and scope of the novel concepts of the invention.

### BRIEF DESCRIPTION OF THE DRAWINGS

The described embodiments may be better understood by reference to the following description and the accompanying drawings, in which:
Fig. 1 is a schematic diagram depicting a circumstance providing a personalized speech dialogue service for a user in one embodiment of the present invention;
Fig. 2 is a schematic diagram depicting a system framework that provides the personalized speech dialogue service for the user according to one embodiment of the present invention;
Fig. 3 is a schematic diagram that describes a method for providing the personalized speech dialogue service for the user according to one embodiment of the present invention;
Fig. 4 is a flowchart illustrating a method for providing the personalized speech dialogue service according to one embodiment of the present invention;
Fig. 5 is one further flowchart illustrating the method for providing a personalized speech dialogue service according to one further embodiment of the present invention; and
Fig. 6 is a schematic diagram depicting a transaction system according to one embodiment of the present invention.

### DETAILED DESCRIPTION OF THE EXEMPLARY EMBODIMENTS

The present invention is more particularly described in the following examples that are intended as illustrative only since numerous modifications and variations therein will be apparent to those skilled in the art. Like numbers in the drawings indicate like components throughout the views. As used in the description herein and throughout the claims that follow, unless the context clearly dictates otherwise, the meaning of "a," "an" and "the" includes plural reference, and the meaning of "in" includes "in" and "on." Titles or subtitles can be used herein for the convenience of a reader, which shall have no influence on the scope of the present invention.

The terms used herein generally have their ordinary meanings in the art. In the case of conflict, the present document, including any definitions given herein, will prevail. The same thing can be expressed in more than one way. Alternative language and synonyms can be used for any term(s) discussed herein, and no special significance is to be placed upon whether a term is elaborated or discussed herein. A recital of one or more synonyms does not exclude the use of other synonyms. The use of examples anywhere in this specification including examples of any terms is illustrative only, and in no way limits the scope and meaning of the present invention or of any exemplified term. Likewise, the present invention is not limited to various embodiments given herein. Numbering terms such as "first," "second" or "third" can be used to describe various components, signals or the like, which are for distinguishing one component/signal from another one only, and are not intended to, nor should be construed to impose any substantive limitations on the components, signals or the like.

For providing an individual speech dialogue service for each of users and employing a simulated humanoid chatbot to proceed natural language dialogues, provided in the present invention is a method for providing a personalized speech dialogue service, a system, and a transaction system allowing customization of a personalized model.

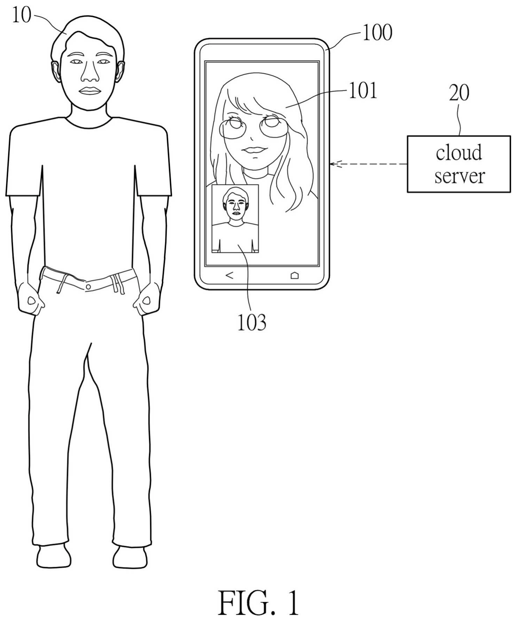

Reference is made to Fig. 1, which is a schematic diagram depicting a circumstance that a personalized speech dialogue service is provided according to one embodiment of the present invention. The system providing the personalized speech dialogue service includes a cloud server 20. The cloud server 20 provides a user 10 and a generative artificial intelligence (AI) a simulated humanoid chatbot 101 that is generated by learning knowledge, speeches, behaviors and emotional expressions of humans through a machine-learning algorithm to perform a natural language dialogue service. More specifically, an intelligence model being operated behind the simulated humanoid chatbot 101 is configured to learn an audio frequency and a speech rate of a current dialogue of the user 10, so that the simulated humanoid chatbot 101 can conduct dialogues with corresponding audio frequency and speech rate that can appropriately reflect a current emotion of the user 10.

For example, when the intelligence model analyzes pitches, rhythms and intensity changes in the speech data to determine a current emotion of the user 10, for example, a sad emotion, the simulated humanoid chatbot 101 can adjust an audio frequency and a speech rate of speech for appropriately reflecting the current sad emotion of the user 10.

The diagram schematically shows that the user 10 manipulates an application executed in a user device 100. For example, a dialogue interface can be initiated in the application and can be used to connect with the cloud server 20. Then the user device 100 is used to load a selected simulated humanoid chatbot 101 including a model data and image signals of the simulated humanoid chatbot 101 from the cloud server 20. Just like two people conducting video chatting in a real world, a dialogue interface is initiated on a display of the user device 100 showing that a user image 103 representative of the user and the simulated humanoid chatbot 101 are in dialogue.

When performing the personalized dialogue service, the user device 100 connects with the cloud server 20, and an audio function (e.g., a microphone) and a video function (e.g., a camera) of the user device 100 are activated for recording audio and capturing images in real time. The speech data and the image data can be uploaded to the cloud server 20 in real time. A language model and an image model operated in the cloud server 20 can be used to extract the speech features or also the image features. Further, current environmental information can also be included. An intelligence model can therefore be used to determine a current emotion of the user 10 and output a speech dialogue. It should be noted that the user's emotion can be determined by analyzing pitches, rhythms, intensity changes and semantic meaning in each of sections of the speed data using the intelligence model.

It should be noted that, when the language model generates speech dialogues, a related audio data is configured to be transmitted to the user device 100 and then displayed on the dialogue interface through a textualization process in one of the embodiments of the present invention. The speech dialogue can be either emitted by a loudspeaker of the user device 100 or simulatively spoken by the simulated humanoid chatbot 101 via the dialogue interface. The artificial intelligence technology operated in the user device 100 can generate speeches and facial expressions based on current emotions of the user. For example, mouth movements of a simulated character to be generated can simulate the mouth movements of a human when he is speaking, and the movements of facial muscles of the human can also be configured to match the emotion expressed by the current speeches.

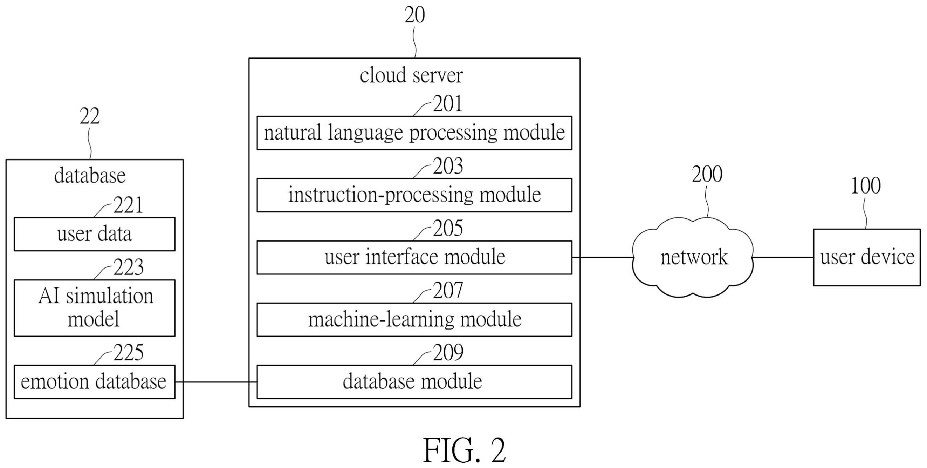

The cloud server 20 implements a system for providing the personalized speech dialogue service. The system operates various Al algorithms and models through collaboration of software and hardware. Reference is made to Fig. 2, which is a schematic diagram depicting a system framework of the system according to one embodiment of the present invention.

The cloud server 20 implements various functional modules through collaboration of a processing circuit, a memory and software of the computer system. The functional modules are such as a natural language processing module 201 that is used to process the dialogues with the user; an instruction-processing module 203 that can provide a corresponding service based on a requirement submitted by the user via the dialogue interface; and a user interface module 205 that interfaces with a user interface initiated by a specific application executed in the user device and is used to generate an interface for having dialogues with the user. The cloud server 20 further includes a machine-learning module 207 that is used to train a natural language module based on the user's requirement, and a database module 209 that is used to provide a built-in or an external database.

The cloud server 20 includes a built-in or an external database 22 that essentially includes user data 221 and Al simulation models 223 that can generate multiple simulated objects, and also an emotion database 225 that is established through big-data analysis. The emotion database 225 stores the data of audio frequencies, speech rates and wordings that correspond to various emotions and is used for the simulated object to use instructions to query dialogues corresponding to a specific emotion. The cloud server 20 provides the personalized speech dialogue service for users via a network 200. The user can manipulate the user device 100 to access services of the cloud server 20 over the network 200 by an application executed in the user device 100.

The database module 209 of the cloud server 20 is configured to access and manage a built-in or an external database 22. The database module 209 also maintains the user data 221 that is generated when the user uses the personalized speech dialogue service. The database module 209 also provides a simulated object that is generated by an Al simulation model 223. The simulated object can be a humanoid object. The humanoid object can be any of simulated humanoid chatbots that may be in various domains provided by multiple users. Therefore, the cloud server 20 can provide multiple types of the simulated humanoid chatbots.

In certain embodiments of the present invention, the database 22 of the cloud server 20 provides the simulated objects that are generated by the AI simulation model 223. The AI simulation model 223 can be used to generate multiple simulated humanoid chatbots that can be humanoid robots, animal robots or the robots of various forms. In addition to simulating different appearances and accents of the simulated humanoid chatbots, the simulated humanoid chatbots can also be assigned with various expertise so as to provide the users with personalized speech dialogue services based on the users' requirements. **It** should be noted that the method for providing a personalized speech dialogue service of the present invention can use the Al simulation model 223 to generate the natural language dialogues for the simulated object. The AI simulation model 223 can employ a generative artificial intelligence technology to establish a simulated character generative model by learning a huge amount of character data using a machine-learning algorithm. Further, the Al simulation model 223 uses a generative artificial intelligence technology based on a three-dimensional rendering technology to generate images and generate a specific simulated object according to the user's requirement, for example, based on prompts made by the user.

Further, for giving the simulated humanoid chatbot a professional background, a machine-learning algorithm is used to learn the data in specific field so as to establish an intelligence model in the field. **In an** exemplary example, a retrieval augmented generation (RAG) technology based on a large language model (LLM) is used to implement a natural language model for the specific field.

The instruction-processing module 203 of the cloud server 20 is used to process the various requests (e.g., a request for conducting dialogues, a request for selecting the simulated humanoid chatbot that performs the personalized speech dialogue service, and the other requests produced in the speech dialogues) transmitted from the user device 100.

The user interface module 205 of the cloud server 20 is used to transmit various messages such as audiovisual contents, texts and images to the user device 100, or perform the requisite processes such as an encoding process, a decoding process, a compressing process and a decompressing process on the messages. The user interface module 205 is also used to process the dialogues to be displayed on the dialogue interface between two or more parties and generate various functions and graphs on the dialogue interface.

In the cloud server 20, the machine-learning module 207 operates a machine-learning algorithm that applies a neural network deep-learning technology to learn the speech features of the user and implements a speech model through a training process performed on a huge amount speech data. A natural language processing model (NLP model) is accordingly established. The natural language process model is used to extract speech features from the speech data and obtains semantic meaning from the speech features so as to generate the responsive dialogues. Further, the machine-learning module 207 operates the machine-learning algorithm to learn a huge amount of facial image features of users so as to establish an image model that is trained to learn expressions and emotions of the users. Thus, in addition to determining the user's emotion based on the speech features, the cloud server 20 can use the image model to process the image features for assisting in determining the user's emotion.

The cloud server 20 applies a natural language processing module 201 to deal with the speech data from the user device 100. In addition to textualizing the speech data, the cloud server 20 operates a natural language processing model to extract speech features of the speech data, recognize semantic meaning, generate a speech dialogue and then respond to the user in a natural language.

Further, in the process of obtaining the semantic meaning and determining the user emotion, the speech features in use includes pitches, rhythms and intensity changes of the speech data. The speech model relies on these speech features (e.g., acoustic waveform characteristics) to identify a current emotion of the user. The speech model can also learn the user's personality and preference over a long period of time so as to create a user profile.

A machine-learning algorithm operated in the computer system is used to learn correlations of human languages, classifications, deep-learning language structure, and sentences of the languages so as the establish the natural language processing model. **In** the method of the present invention, the speech data generated from user dialogues are used to train the natural language processing model so as to form a personalized language model. Further, after the personalized language model is established by training the natural language processing model, a deep-learning algorithm can also be used to learn pitches, rhythms and intensity changes of the speech data for identifying the user's emotion in the speech.

It should be noted that the natural language processing module 201 does not simply use any natural language search and dialogue service that may be implemented by a conventional large language model (LLM) such as ChatGPT because the conventional ChatGPT can only reply one-way to a dialogue with the user rather than learning the current emotion of the user or referring to environmental information. Therefore, the natural language processing module 201 can use the user profile, the current semantic meaning, and real-time environmental information (e.g., a current location, an instant weather and time) to enable the simulated humanoid chatbot to proceed dialogues in response to the current emotion of the user. Therefore, the simulated humanoid chatbot can generate the dialogues being consistent with an instant need of the user. **In** certain embodiments of the present invention, the simulated humanoid chatbot outputs the dialogues consistent with the current emotion of the user based on an audio frequency, a speech rate and wordings that correspond to the emotion and can be obtained by querying the emotion database 225.

For example, the system acquires a geographic location of a user (e.g., positioning information obtained from an application) and a weather (e.g., cold day, hot day, sunny day or rainy day) based on environmental information when it is at noon, and a simulated humanoid chatbot can actively suggest an appropriate restaurant according to a user preference. After that, the user can respond to the suggestion with whether or not he wants to eat, an acceptable meal price, or other requests. The simulated humanoid chatbot can accordingly adjust its suggestion immediately or conduct dialogues to confirm requirements of the user.

In one of the embodiments of the present invention, in the machine-learning algorithm that determines a current emotion of the user according to facial image features of the user, a supervised machine learning algorithm can be adopted for learning changes of image features that are labeled manually under different emotions. For example, the image features may include changes in distance ratios, changes of lines, changes of shapes and changes of colors of facial features or specific parts of the user, by which an image model can be trained for determining the user's emotion based on the image features. Thus, in the cloud server 20, the speech model and the image model can be used together for determining the user's emotion, and then the natural language processing module 201 is used to obtain semantic meaning of the speech features and the image features for generating dialogues. An audio frequency, a speech rate and wordings of the dialogues can also be obtained by querying the emotion database 225.

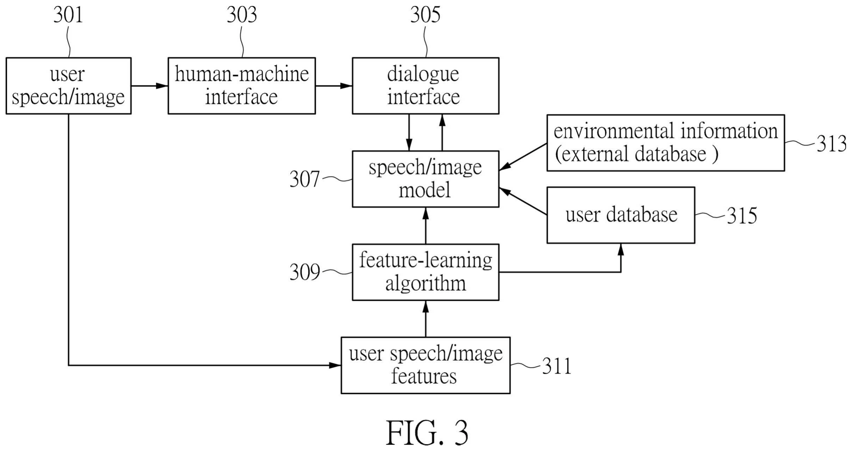

Reference is next made to Fig. 3, which is a schematic diagram describing the method for providing a personalized speech dialogue service based on the above-described system framework that provides the personalized speech dialogue service according to certain embodiments of the present invention.

A user-end human-machine interface 303 is used to convert user speeches and images 301 into texts displayed on a dialogue interface 305 or into spoken speeches. The above-described cloud server can be used to receive the texts or the speech data. The user manipulates an application executed in the user device to send a request to the cloud server for the personalized speech dialogue service. The cloud server can then provide the personalized speech dialogue service to the user via the dialogue interface 305.

In the cloud server, one or more processors of the computer system are used to perform method for providing a personalized speech dialogue service for acquiring the user speeches and images 301 generated by the user device via the dialogue interface 305. According to certain embodiments of the present invention, various sensors of the user device can be used to obtain the speeches and image data of the user. **In an** exemplary example, after the dialogue interface 305 is initiated in the user device, a microphone is activated for receiving the speeches made by the user at the same time, and a camera is activated for capturing facial images of the user. The user speeches or inputted texts can be generated via the human-machine interface 303 and displayed on the dialogue interface 305 for interacting with the simulated object, for example, with natural language dialogues.

The speech and image data are transmitted from the user device to the cloud server. The models operated in the cloud server can be divided into a speech model and an image model. The speech model is used to textualizing the speech data into texts and afterwards extract semantic meaning from the speech data for determining the user's emotion. The image model can be used to analyze the image data for extracting facial features of the user. For example, the image model is used to analyze the image data for obtaining changes of colors, light and shadow of the pixels with respect to the facial features of the user, so that the changes of images of mouth, eyes or specific facial parts can be obtained. For example, the pixels of the facial features can be used to identify geometric relationships between the facial features or the specific parts. The user's current emotion can also be determined according to the geometric relationships between the facial features of the specific parts, the semantic meaning and the speech features.

Further, a speech and image model 307 can acquire the instant environment information 313 from an external database or a server. In certain embodiments of the present invention, after the cloud server and the user device are connected, location information of the user device can be obtained so as to determine geographic location of the user. The environmental information 313 such as local weather, nearby store opening information, geographical information and local festivals based on the location and time relating to the user can be obtained from an external database for the sake of providing effective contents to the user. While the cloud server operates the speech and image model 307, a user profile is retrieved from a user database 315, by which a basic data of the user, a user preference and historical records can be obtained. Further, the cloud server uses the user database 315 to store and update user data having historical dialogue records of each of users in accordance with a time dimension.

The cloud server uses the speech and image model 307 to effectively provide the personalized speech dialogue service for the users. When the user proceeds with the personalized speech dialogues, the cloud server continuously receives user speech/image features 311 and performs a feature-learning algorithm 309 so as to continuously learn the speech data and image data generated in the dialogues, by which the speech and image model 307 can be updated and optimized.

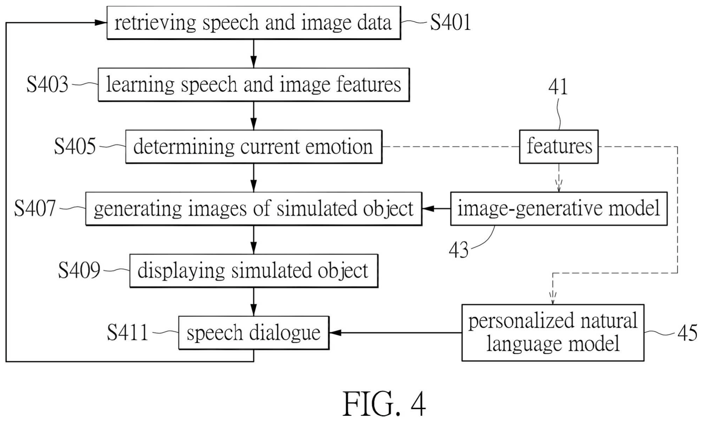

Based on the above-described system framework and operations of the system according to certain embodiments of the present invention, reference is made to Fig. **4****,** which is a flowchart illustrating the method for providing a personalized speech dialogue service in one embodiment of the present invention.

While the cloud server operates the method for providing a personalized speech dialogue service, the user manipulates the user device to execute one of the applications to establish a connection with the cloud server. A dialogue interface is initiated by the application. The application is configured to receive the speech data (or including image data) generated by the user who makes the speech in real time using sensors such as a microphone and/or a camera via the dialogue interface (step S401). Next, the application is configured to learn speech features of the speech made by the user. The speech features can include pitches and changes in rhythms and intensities of the speech transmitted by the user device (step S403). After that, semantic meaning can also be recognized from the speech features. **In** certain embodiments of the present invention, when the speech data generated by the user who makes the speech is received in real time and the image data about the user is also received, the speech features (including semantic meaning) and the image features can be used together for learning the user's current emotion (step S405).

In one of the embodiments of the present invention, when the speech features are obtained, the image features are also extracted from the image data. The speech features and/or image features 41 are submitted to an image-generative model 43 operated in the cloud server for generating image changes of facial expressions, mouth, and specific parts of a simulated humanoid chatbot, and also submitted to a personalized natural language model 45 for generating speech dialogues from the speech features and/or image features 41 in accordance with the user's current emotion.

In the step S405 of obtaining the current emotion of the user, the cloud server uses a natural language processing model to recognize semantic meaning of the speech features, the semantic meaning and the current environmental information are referred to for generating the speech dialogues based on the user's current emotion, in which the speech dialogues are also used to respond to the user's real-time speech.

Further, the cloud server uses an image-generative model 43 to generate images of a simulated object according to the speech features and/or image features (step S407), and the simulated object can be displayed on the dialogue interface displayed on a display of the user device (step S409). The language model personalized natural language model 45 can then be used to generate the dialogue contents based on the semantic meaning, the current emotion and/or environmental information of the user so as to proceed dialogues with the user (step S411). For example, the simulated object can be a simulated humanoid chatbot. The images of the simulated object can be used to reflect images of facial expressions, mouth and some specific parts of the user.

Thus, after repeating the above steps, such as receiving speech data, image data speech features an/or image features, and the current emotion to be learned generated by the user device manipulated by the user, so that the personalized speech dialogues are continuously generated.

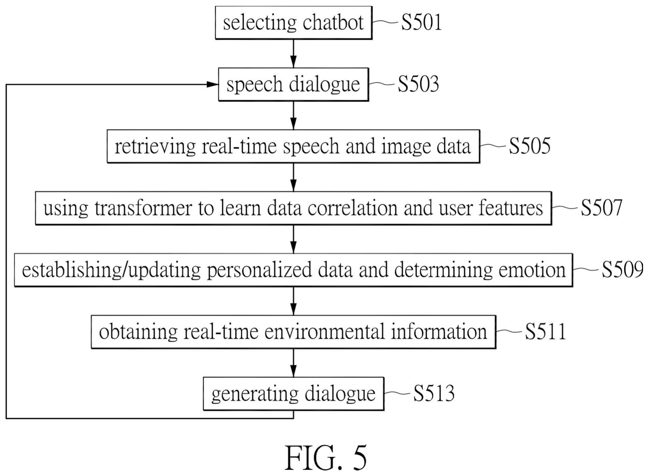

Reference is next made to Fig. 5, which is another flowchart illustrating the method for providing a personalized speech dialogue service according to another embodiment of the present invention.

In one embodiment of the present invention, the cloud server generates an interactive interface by a web server. When the user manipulates the user device to connect with the cloud server, the options having multiple simulated humanoid chatbots are provided via the interactive interface, and the user can select one of the simulated humanoid chatbots from the options (step S501). A speech dialogue is activated (step S503). The user then conducts speech dialogue with the simulated humanoid chatbot via the dialogue interface. **In** addition to activating a microphone to receive audio, a camera can be activated to capture images of the user so as to conduct a video conversation with the simulated humanoid chatbot. **In** the meantime, the cloud server can therefore receive real-time speech and image data (step S505).

In the cloud server, a transformer model is operated for learning data correlation of the speech data and/or image data and extracting speech features and/or image features therefrom (step S507). The cloud server also uses a neural network deep learning technology such as a transformer model with an attention mechanism to learn data correlation based on the features of the speech data and the image data. The speech data and the image data in the past or present can be continuously received from the user device and used to learning user preference and personality so as to establish the user profile that is used to describe the user preference and personality. In an exemplary example, the neural network deep learning technology operated in the cloud server is used to learn friends, family and profession of the user based on activity data of the user over Internet so as to perfect the user profile. Therefore, the speech dialogue service provided by the cloud server can be closer to the requirements of the user, especially the emotional requirement.

Thus, the software sequencies operated in the cloud server can continuously retrieve features from the speech and image data so as to establish or update the personalized data and further acquire the semantic meaning. After that, the user's current emotion can be determined based on the semantic meaning and the user profile (step S509). Further, the cloud server can obtain the current environmental information. For example, the environmental information includes geographic information and time received from the user device, and real time weather information being obtained based on the geographic information by querying an external server (step S511).

The speech features and the semantic meaning of the user can be obtained. The user profile can also be obtained based on a user identification data. The semantic meaning, the user profile, and/or the current environmental information are referred to for the cloud server to generate the speech dialogues (step S513). The steps S503 to S513 are repeated for receiving the speech data generated by the user device, extracting the speech features, and learning the user's current emotion, so that the personalized speech dialogues can be continuously generated.

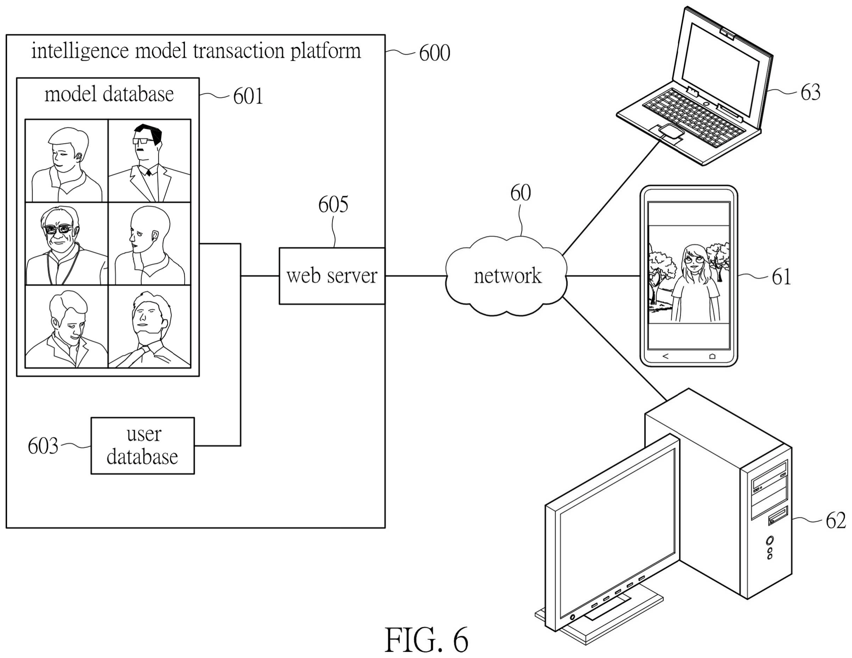

In one further embodiment of the present invention, reference is made to Fig. 6, which is a schematic diagram depicting a transaction system. The transaction system is provided based on the above-described system and the method for providing the personalized speech dialogue service.

The transaction system includes a computer-implemented intelligence model transaction platform 600. The intelligence model transaction platform 600 includes a model database 601, a user database 603 and a web server 605. The user database 603 is used to store the user data that is stored and updated in compliance with time dimension. The intelligence model transaction platform 600 initiates a web interface by a web server 605 to provide a user to customize a personalized simulated humanoid chatbot. On the other hand, the web server 605 allows the user to remotely select (or obtain through transaction) the simulated humanoid chatbot to be introduced to a user device for conducting speech dialogues in an application.

The intelligence model transaction platform 600 provides options with multiple simulated humanoid chatbots via an interactive interface. These simulated humanoid chatbots generated by the AI simulation model can be stored in the model database 601. Users can use the user devices 61, 62, and 63 to connect with the intelligence model transaction platform 600 via the network 60 and select any of the simulated humanoid chatbots from the options via the interactive interface for proceeding speech dialogues.

In certain embodiments of the present invention, the computer-implemented transaction system allows the user to share his personalized simulated humanoid chatbot with other users. The personalized simulated humanoid chatbot that is obtained through customization can be equipped with professional knowledges in specific technical fields, or can be designed with a unique appearance, and can therefore be put on the intelligence model transaction platform 600 for sale.

In various embodiments of customizing the personalized simulated humanoid chatbot, the transaction system receives speech data of the user generated by the user device and extracts speech features. A deep-learning algorithm is performed to learn the user preference and personality from the past and presently received speech data (or including image data). Similarly, the speech features (or including the image features) are referred to for establishing the user profile. Thus, the transaction system allows the user to customize an appearance of the personalized simulated humanoid chatbot. The design parameters of the customized simulated humanoid chatbot can be transmitted to the intelligence model transaction platform 600 via the web interface, and the personalized simulated humanoid chatbot can be established according to the user profile and the design parameters. The simulated humanoid chatbot can then be stored to the model database 601.

Afterwards, the user is allowed to manipulate the user device to connect with the intelligence model transaction platform 600 for retrieving image signals and model data of one of the simulated humanoid chatbots from the model database 601 of the transaction system. The simulated humanoid chatbot can then be displayed on the user device and can be used to proceed speech dialogues.

In conclusion, according to the above-described embodiments of the method for providing a personalized speech dialogue service, the system and the transaction system, a personal data of a user can be learned by the functions implemented in a cloud server through collaboration of the software and hardware. The cloud server performs a machine-learning algorithm and a natural language model for establishing an intelligence model capable of providing the personalized speech dialogue service. The personalized speech dialogue service provides a chatbot to proceed the natural language service and allows the user to chat with the chatbot in a natural language when the chatbot can determine the user's current emotion based on the environmental information, the user preference and the current semantic meaning. The simulated humanoid chatbot that is generated in a training process performed in the cloud server can be shared with others through an intelligence model transaction platform implemented by the transaction system.

The foregoing description of the exemplary embodiments of the invention has been presented only for the purposes of illustration and description and is not intended to be exhaustive or to limit the invention to the precise forms disclosed. Many modifications and variations are possible in light of the above teaching.

The embodiments were chosen and described in order to explain the principles of the invention and their practical application so as to enable others skilled in the art to utilize the invention and various embodiments and with various modifications as are suited to the particular use contemplated.

## Claims

1. A method for providing a personalized speech dialogue service, operated in a cloud server (20), **characterized by** comprising:
receiving, by a user device (100), a speech data that is generated by a user in real time and extracting current speech features of the user;
learning a current emotion of the user based on the speech features;
recognizing, by a natural language processing model, semantic meaning of the speech features, and
correspondingly generating a speech dialogue in response to the current emotion of the user according to the semantic meaning and current environmental information; and
outputting the speech dialogue by a simulated object displayed on a display of the user device (100);
wherein, after repeatedly receiving the speech data generated by the user device (100), extracting the speech features, and learning the current emotion of the user, personalized speech dialogues are continuously outputted.

2. The method according to claim 1, wherein the speech features comprise pitches, rhythm, and intensity changes in the speech data transmitted by the user device (100); and, when the speech data generated from a real-time speech of the user is received, a real-time image data of the user is also received, current image features of the user are extracted, and both the speech features and the image features are referred to for learning the current emotion of the user.

3. The method according to claim 2, wherein an audio frequency, a speech rate and wordings that correspond to the current emotion of the user are obtained by querying an emotion database (225), and the audio frequency, the speech rate and the wordings are referred to for generating the personalized speech dialogues.

4. The method according to claim 2, wherein, in the cloud server (20), deep learning is performed to learn preference and personality of the user for establishing a user profile based on the speech data and image data that are continuously received in past and present, and the current environmental information received by the cloud server (20) comprises geographic information and a timestamp from the user device (100), and weather information corresponding to the geographic information received from an external server.

5. The method according to claim **4,** wherein, in the cloud server (20), the current speech features and semantic meaning of the speech data of the user are retrieved, and the user profile is obtained based on identification of the user; and the speech dialogue is correspondingly generated according to the semantic meaning, the user profile, and/or the current environmental information.

6. The method according to any of claim 1 to claim 5, wherein, when the cloud server (20) operates the method for providing a personalized speech dialogue service, the simulated object that is generated by an AI simulation model (223) is retrieved from a database (22); after the cloud server (20) transmits image signals and model data to the user device (100), the simulated object is displayed on a display of the user device (100) and simulates pronunciation of the speech dialogue.

7. The method according to claim 6, wherein the simulated object is a simulated humanoid chatbot, and options with multiple of the simulated humanoid chatbots are provided by the cloud server (20) via an interactive interface generated by a web server.

8. A system for providing a personalized speech dialogue service, **characterized by** comprising:
a cloud server (20), connected with a user device (100), providing a user the personalized speech dialogue service via a dialogue interface and performing the method for providing a personalized speech dialogue service by one or more processors, comprising:
receiving, by the user device (100), a speech data that is generated by a user in real time and extracting current speech features of the user;
learning the user's current emotion based on the speech features;
recognizing, by a natural language processing model, semantic meaning of the speech features, and
correspondingly generating a speech dialogue in response to the user's current emotion according to the semantic meaning and current environmental information; and
outputting the speech dialogue by a simulated object displayed on a display of the user device (100);
wherein, after repeatedly receiving the speech data generated by the user device (100), extracting the speech features, and learning the user's current emotion, the personalized speech dialogues are continuously outputted.

9. The system according to claim 8, wherein, when the speech data generated from a real-time speech of the user is received, a real-time image data of the user is also received, current image features of the user are extracted, and both the speech features and the image features are referred to for learning a current emotion of the user.

10. The system according to claim 9, wherein an audio frequency, a speech rate and wordings that correspond to the current emotion of the user are obtained by querying an emotion database (225), and the audio frequency, the speech rate and the wordings are referred to for generating the personalized speech dialogues.

11. The system according to claim 9, wherein, in the cloud server (20), deep learning is performed to learn preference and personality of the user for establishing a user profile based on the speech data and image data that are continuously received in past and present, and the current environmental information received by the cloud server (20) comprises geographic information and a timestamp from the user device (100), and weather information corresponding to the geographic information received from an external server.

12. The system according to claim 11, wherein, in the cloud server (20), the current speech features and semantic meaning of the speech data of the user are retrieved, and the user profile is obtained based on identification of the user; and the speech dialogue is correspondingly generated according to the semantic meaning, the user profile, and/or the current environmental information.

13. The system according to any of claim 8 to claim 12, wherein, when the cloud server (20) operates the method for providing a personalized speech dialogue service, the simulated object that is generated by an AI simulation model (223) is retrieved from a database (22); after the cloud server (20) transmits image signals and model data to the user device (100), the simulated object is displayed on a display of the user device (100) and simulates pronunciation of the speech dialogue.

14. A transaction system, **characterized by** comprising:
an intelligence model transaction platform (600) that is established by a computer system and provides options with multiple simulated objects via an interactive interface;
a model database (601) used to store the multiple simulated objects that are generated by an AI simulation model (223);
a user database (603) used to store user data that is stored and updated in accordance with a time dimension; and
a web server configured to allow a user to customize a personalized simulated object via a web interface;
wherein the transaction system receives speech data generated by the user from a user device (100) and
extracts current speech features of the user so as to perform deep learning to learn preference and
personality of the user for establishing a user profile based on the speech data and image data that are continuously received in past and present; when design parameters are received via the web interface, the transaction system creates the personalized simulated object according to the user profile and the design parameters.

15. The transaction system according to claim 14, wherein the user device (100) receives image signals and model data of the simulated object from the model database (601), and the simulated object is displayed on a display of the user device (100) and simulates pronunciation of the speech dialogue.
